# EUROPÄISCHE PATENTSCHRIFT

(11) **EP 1 825 157 B1**
(45) Veröffentlichungstag und Bekanntmachung des Hinweises auf die Patenterteilung: **20.08.2008**
(21) Anmeldenummer: 05826009.2
(22) Anmeldetag: 14.12.2005
(51) Int. Cl.: F16C 33/66, F16C 37/00, F16N 7/30

(54) **VERFAHREN UND VORRICHTUNG ZUM SCHMIEREN UND KÜHLEN EINES HOCHBELASTETEN LAGERS**
METHOD AND DEVICE FOR LUBRICATING AND COOLING A BEARING THAT IS SUBJECT TO HIGH LOADS
PROCEDE ET DISPOSITIF POUR LUBRIFIER ET REFROIDIR UN PALIER FORTEMENT CHARGE

(30) Priorität: 16.12.2004 DE 102004060479
(43) Veröffentlichungstag der Anmeldung: 29.08.2007
(73) Patentinhaber: Schaeffler KG, 9721 Schweinfurt (DE)
(72) Erfinder: BAYER, Oswald, 97491 Aidhausen (DE); SCHELLBERG, Oliver, 97516 Wiebelsberg (DE)
(86) Internationale Anmeldenummer: PCT/DE2005/002246
(87) Internationale Veröffentlichungsnummer: WO 2006/063571

(56) Entgegenhaltungen:
- DE-A1- 3 833 581
- DE-A1- 19 959 472
- US-A- 4 714 199
- PATENT ABSTRACTS OF JAPAN Bd. 2003, Nr. 12, 5. Dezember 2003 (2003-12-05) & JP 2005 299923 A (NSK LTD), 27. Oktober 2005 (2005-10-27)

## Beschreibung

### Gebiet der Erfindung

Die Erfindung bezieht sich auf ein Verfahren zum Schmieren und Kühlen eines hochbelasteten Lagers, insbesondere eines schnelllaufenden und/oder wärmebelasteten Lagers, wobei ein Schmierstoff und ein Gas gemischt werden, sowie eine Vorrichtung zur Durchführung dieses Verfahrens.

### Hintergrund der Erfindung

Hochbelastete Lager der oben beschriebenen Art dienen beispielsweise zur Lagerung von Motorspindeln in Werkzeugmaschinen, von Verdichter- und Turbinenwellen in Gasturbinen, von Getriebewellen in schnelllaufenden Getrieben usw. Bei hohen Drehzahlen von Lagern entsteht durch die Reibung Wärme, die zu einer Temperaturerhöhung im Lager führt. Die erhöhte Lagertemperatur wirkt sich im Allgemeinen nachteilig auf die Geometrie des Lagers und damit auf die Lagergenauigkeit aus, zudem beeinflusst sie zusätzlich die Qualität des Schmierstoffs und damit die Schmierwirkung in nachteiliger Weise. Um diese Nachteile zu vermeiden, sind bereits verschiedene Maßnahmen zur Kühlung von hochbelasteten Lagern bekannt, nämlich beispielsweise mittels eines durch Kühlkanäle in der Lagerumgebung geleiteten Kühlmittels oder mittels einer Erhöhung der Schmierstoffmenge über die für die Schmierung erforderliche Minimal-Schmierstoffmenge hinaus. Die erste Maßnahme ist konstruktiv und baulich aufwendig und teuer, und sie führt im Allgemeinen zu großen Temperaturdifferenzen im Lager mit der Gefahr, dass das Lager Schaden erleidet. Die letztere Maßnahme bedingt unter Umständen hohe hydraulische Verluste im Lager, so dass die Antriebsleistung entsprechend erhöht werden muss, wodurch sich der Wirkungsgrad verschlechtert.

Durch die japanische Patentveröffentlichung Nr. 2000-329140 ist bereits eine Lagereinheit bekannt, bei der einem Schmierstoff nach dem Durchlaufen eines Radiallagers und eines Axiallagers in einer Mischkammer ein Gas, in diesem besonderen Fall Luft zugemischt wird, um den Schmierstoff zu kühlen. Das Schmierstoff-/Gasgemisch wird anschließend einer so genannten Okklusioseinrichtung zugeführt, in der das Gas, welches einen Teil der Schmierstoffwärme aufgenommen hat, vom Schmierstoff wieder getrennt und an die Umgebung abgeführt wird, und aus der der gekühlte Schmierstoff entnommen und den Lagern wieder zugeführt wird.

Diese Anordnung hat jedoch den Nachteil, dass der Schmierstoff sich noch im Lagerbereich bis auf seine Endtemperatur aufheizt, so dass verhältnismäßig große Temperaturunterschiede zwischen dem Bereich, in welchem der Schmierstoff der Lageranordnung zugeführt wird, und dem Bereich, in welchem der Schmierstoff die Lageranordnung verlässt, bestehen und somit die Lagergeometrie nach wie vor nachteilig beeinflusst wird. Darüber hinaus ist die benötigte Menge Schmierstoff sehr hoch, so dass im Lager hohe hydraulische Verluste auftreten und dessen Wirkungsgrad sinkt.

### Aufgabe der Erfindung

Der Erfindung liegt die Aufgabe zugrunde, ein Verfahren zum Schmieren und Kühlen eines hochbelasteten Lagers über die Schmierstoffzuführung sowie eine Vorrichtung zur Durchführung dieses Verfahrens zu schaffen, mittels derer eine effektive und gleichmäßige Kühlung eines Lagers ohne zusätzliche hydraulische Verlustleistung im Lager erreicht werden kann.

### Zusammenfassung der Erfindung

Der Erfindung liegt die Erkenntnis zugrunde, dass es unter Ausnutzung einer typischen Eigenschaft von überkritischen bzw. hyperkritischen Gasen, nämlich andere Medien, wie etwa Schmierstoffe, lösen zu können, möglich sein müsste, einen Wärmeübergang vom Lager zum Gas direkt bzw. vom Schmierstoff zum Gas schon im Bereich des Lagers, und nicht erst hinter dem Lager zu bewerkstelligen, um so eine effektive und gleichmäßige Kühlung des gesamten Lagers ohne zusätzliche Schmierstoffmengen sicherzustellen.

Die Erfindung geht gemäß den Merkmalen von Anspruch 1 und Anspruch 9 aus von einem Verfahren sowie einer Vorrichtung zum Schmieren und Kühlen eines hochbelasteten Lagers, insbesondere eines schnelllaufenden und/oder wärmebelasteten Lagers, bei welchen ein Schmierstoff und ein Gas gemischt werden, um das Lager zu kühlen.

Das Verfahren gemäß der vorliegenden Erfindung sieht dabei folgende Verfahrensschritte vor:
a) Ein Gas wird in einen überkritischen Zustand versetzt.
b) Ein Schmierstoff wird in dem überkritischen Gas gelöst.
c) Das Gas-/Schmierstoffgemisch wird dem Lager zugeführt und in diesem unter Trennung des Schmierstoffs vom Gas entspannt.
d) Gas und Schmierstoff werden aus dem Lager abgeführt.

Im Lagerbereich liegen demnach vorteilhaft ein Schmierstoff zum Schmieren und ein unterkühltes Gas zum Kühlen des Lagers vor.

Da das Kühl- und Transportmedium für den Schmierstoff ein Gas ist, werden keine zusätzlichen Lagerverluste verursacht. Durch eine geeignete Wahl des Gases lässt sich erreichen, dass dieses beim Entspannen kurzzeitig als "Feststoff-Schnee" vorliegt, welches nicht nur als Kühlmedium sondern direkt zusätzlich als Schmierstoff wirken kann. Da der Wärmeübergang vom Lager und vom Schmierstoff auf das Gas schon im Bereich des Lagers und nicht erst hinter dem Lager stattfindet, wird eine gleichmäßige und effektive Kühlung des Lagers erreicht. Durch die Gaskühlung kann vor allem auch das gelagerte rotierende Maschinenteil ohne Erhöhung der Verlustleistung gekühlt werden, so dass auch die Temperaturdifferenzen zwischen dem Innenring und dem Außenring des Lagers in niedrigen Grenzen gehalten werden können.

Gemäß einer Ausgestaltung der Erfindung ist vorgesehen, dass das Gas einem Gasbehälter entnommen und nach dem Durchströmen des Lagers in die Umgebung entlassen wird, wobei selbstverständlich ein umweltverträgliches Gas verwendet wird, wie weiter unten noch genauer dargelegt wird.

Bei geeigneter Wahl des Gases kann dieses gemäß einer weiteren Ausgestaltung der Erfindung im Gasbehälter unter natürlichen Umgebungsbedingungen gespeichert und erst zum Zwecke der Überführung in einen überkritischen Zustand zunächst adiabat verdichtet und sodann isobar abgekühlt werden, bevor der Schmierstoff zugeführt und in dem überkritischen Gas gelöst wird.

Im Lager wird das Gas vorzugsweise unter Abgabe des Schmierstoffs adiabat bis in einen stark unterkühlen Zustand entspannt und dann unter Aufnahme von Lagerwärme isobar, also unter gleich bleibendem Umgebungsdruck aufgeheizt und in die Umgebung entlassen. Der Schmierstoff wird beispielsweise aus einem Schmierstoffbehälter, Schmierstoffsumpf oder dergleichen entnommen und nach dem Durchlauf durch das Lager wieder in den Schmierstoffbehälter zurückgeführt. Als für das erfindungsgemäße Verfahren geeignetes Gas bzw. geeigneter Schmierstoff sind Kohlendioxid (CO₂) bzw. ein auf einem Kohlenwasserstoff basierender Schmierstoff vorgesehen.

Die erfindungsgemäße Vorrichtung zur Durchführung des oben beschriebenen Verfahrens weist eine Einrichtung zum Mischen eines Schmierstoffs mit einem Gas auf, und sie ist insbesondere gekennzeichnet durch folgende Merkmale:
■ einen Gasbehälter zum Speichern eines Gases unter natürlichen Umgebungsbedingungen;
■ einen dem Gasbehälter nachgeordneten Verdichter (Pumpe) zum Verdichten des Gases;
■ einen dem Verdichter nachgeordneten, als Kühleinrichtung dienenden Wärmetauscher zum Kühlen des Gases;
■ eine dem Wärmetauscher nachgeordnete Vorrichtung zum Zuführen eines Schmierstoffs zu dem Gas;
■ eine dieser Vorrichtung nachgeordnete Einrichtung zum Zuführen des Gas-/Schmierstoffgemisches zum Lager;
■ eine dem Lager zugeordnete Drossel bzw. Vorrichtung zum Entspannen des Gas-/Schmierstoffgemisches; und
■ eine dem Lager nachgeordnete Einrichtung zum Abführen des Gases und zum Sammeln des Schmierstoffs.

Wie weiter vorne bereits beschrieben wurde, wird das Gas vorzugsweise in die Umgebung abgeführt, so dass der Gaskreislauf ein offener Kreislauf ist.

Gemäß einer weiteren Ausgestaltung der erfindungsgemäßen Vorrichtung ist für den Schmierstoff ein Schmierstoffbehälter vorgesehen, aus dem dieses zum Zwecke der Zuführung zum Gas entnommen und in den es nach Durchlaufen des Lagers wieder zurückgeführt wird. Der Schmierstoffkreislauf ist demnach ein geschlossener Kreislauf.

### Kurze Beschreibung der Zeichnungen

Eine bevorzugte Ausführungsform der Erfindung wird nachfolgend unter Bezugnahme auf die beigefügten Zeichnungen näher erläutert. Dabei zeigen:
- Figur 1: schematisch und bildhaft den Verfahrensablauf beim Schmieren und Kühlen eines Radiallagers;
- Figur 2: ein Temperatur-/Zeitdiagramm des Gases während des Verfahrensablaufs;
- Figur 3: ein Ablaufdiagramm des Verfahrens mit den verschiedenen Verfahrensstufen;
- Figur 4: den Verfahrensablauf des Gases im pv-Diagramm; und
- Figur 5: den Verfahrensablauf des Gases im Ts-Diagramm.

### Detaillierte Beschreibung der Zeichnungen

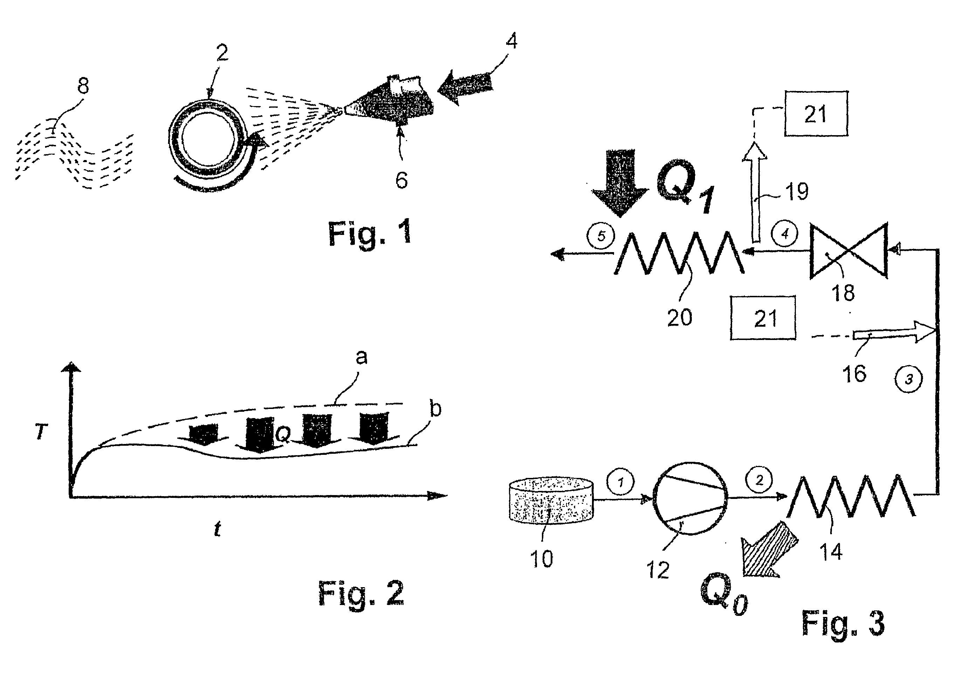

Fig. 1 erläutert bildhaft das erfindungsgemäße Verfahren und zeigt eine Vorrichtung zur Durchführung dieses Verfahrens im Bereich des zu schmierenden und zu kühlenden Lagers 2, im vorliegenden Fall eines Radiallagers. Ein Gas-/Schmierstoffgemisch 4, welches aus einem zuvor in einer anhand der Fig. 3 zu beschreibenden Weise in einen überkritischen Zustand versetzt wurde und in welchem ein Schmierstoff gelöst ist, wird in einer nicht als konstruktiver Bestandteil des Lagers ausgebildeten Drosselvorrichtung 6 beispielsweise auf den im Lager 2 herrschenden Umgebungsdruck entspannt. Hierdurch wird der im Gas gelöste Schmierstoff wieder abgeschieden, so dass es zur Schmierung des Lagers 2 verwendet werden kann. Das durch die Entspannung stark unterkühlte Gas nimmt aus der Umgebung, also vom Lager 2 und vom Schmierstoff, Wärme auf, so dass das Lager 2 gekühlt wird. Das aufgewärmte und vom Schmierstoff getrennte Gas 8 wird abgeleitet und transportiert dabei die dem Lager 2 entzogene Wärme ab.

Fig. 2 zeigt schematisch die Temperatur T eines Lagers über der Zeit t ohne eine wirksame Kühlung (Kurve a) bzw. mit einer wirksamen Kühlung gemäß der vorliegenden Erfindung (Kurve b). Wie die Fig. 2 erkennen lässt, nimmt die Temperatur T des Lagers im Laufe seiner Betriebszeit t ohne wirksame Kühlung (Kurve a) kontinuierlich in Richtung eines Grenzwertes zu, der bei hochbelasteten Lagern über einer für das Lager verträglichen Größe liegen kann, wie eingangs erläutert wurde. Durch ständige Abfuhr einer spezifischen Wärmemenge, d.h. Wärmemenge Q in der Zeiteinheit, wird die Temperaturkurve so verschoben (Kurve b), dass der letztendlich erreichte Grenzwert unterhalb der Verträglichkeitsgrenze für das Lager liegt.

Fig. 3 zeigt ein Ablaufdiagramm des erfindungsgemäßen Verfahrens, bezogen auf das dabei eingesetzte Gas. Das Gas wird einem Gasbehälter 10 entnommen, in welchem es beispielsweise unter normalen Umgebungsbedingungen aufbewahrt wird. Das Gas wird einem Verdichter 12 zugeführt (Strecke ①) sowie in diesem adiabat verdichtet und damit in einen überkritischen Zustand verbracht, wobei sich seine Temperatur T und sein Druck p erhöhen. Anschließend wird das überkritische Gas einer Kühleinrichtung 14 zugeführt (Strecke ②), wo es isobar abgekühlt wird, wobei es überkritisch bleibt. Die abgeführte spezifische Wärmemenge ist mit Q₀ bezeichnet.

Dem abgekühlten Gas wird ein aus einem Schmierstoffbehälter 21 entnommener Schmierstoff zugegeben, wie durch den Pfeil 16 dargestellt ist. Der Schmierstoff wird in dem abgekühlten, überkritischen Gas gelöst. Das Gas-/Schmierstoffgemisch wird anschließend einer konstruktiv dem Lager zugeordneten Drosselvorrichtung 18 zugeführt, in der es adiabat auf den im Lager herrschenden Umgebungsdruck entspannt und in eine Nassdampf-Phase überführt wird. Dabei wird der gelöste Schmierstoff abgeschieden (Pfeil 19), so dass es seine eigentliche Aufgabe, das Lager zu schmieren, erfüllen kann.

Da das Gas selbst beim Entspannen kurzzeitig als "Feststoff-Schnee" vorliegt, kann es ebenfalls direkt als Schmierstoff dienen. Beim Durchlaufen des Lagers (Strecke ④) nimmt das Gas vom Lager (und vom Schmierstoff) Wärme auf, so dass diese gekühlt werden. Der Lagerbereich ist in Fig. 3 symbolisch als Wärmetauscher 20 dargestellt. Die von dem Gas aufgenommene spezifische Wärmemenge ist mit Q₁ bezeichnet.

Das im Lagerbereich (Wärmetauscher 20) isobar erwärmte Gas wird in die Umgebung abgeführt (Strecke ⑤), während der Schmierstoff dem Schmierstoffbehälter 21 wieder zugeführt wird.

Das in Fig. 3 dargestellte Ablaufprinzip ist im Folgenden nochmals kurz zusammengefasst:
① (ideal ungedrosseltes) CO₂ (p1, T1)
② Adiabat verdichtetes CO₂ (überkritisch)
   (p2>p1, T2>T1)
③ Isobar abgekühltes CO₂ (überkritisch)
   (p3=p2, T3<T2)
   (Zugabe Schmierstoff)
④ Adiabat expandiertes CO₂ (Nassdampf)
   (p4=pu, T4<Tu)
   (Schmierstoff abgeschieden)
⑤ Isobar aufgeheiztes CO₂(Gas)
   (p5=pu, T5=Tu)

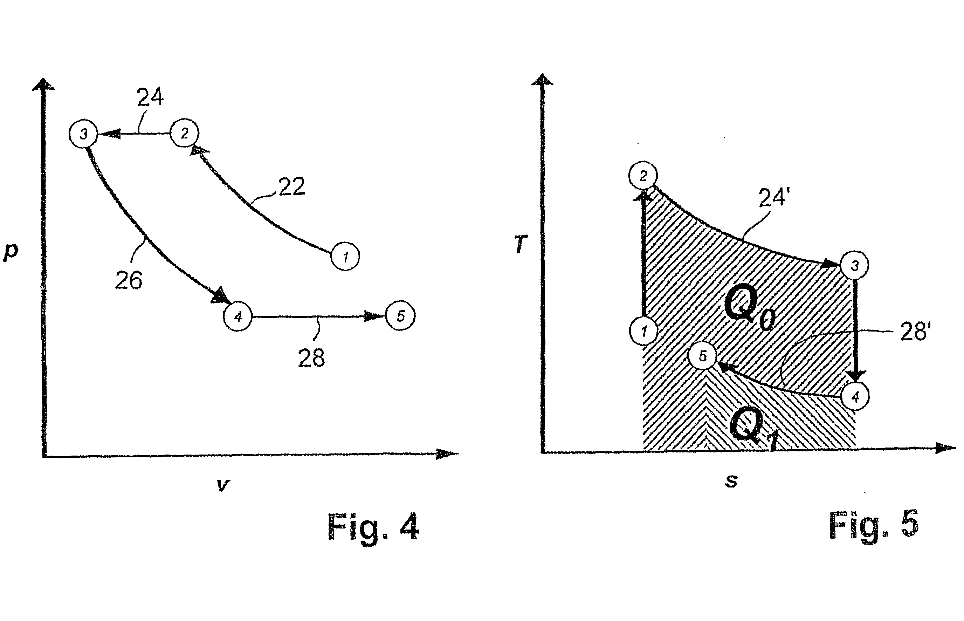

Fig. 4 zeigt den beschriebenen Prozessablauf, auf das Gas bezogen, in einem pv-Diagramm. Die mit den Symbolen ①, ② usw. bezeichneten Gaszustände entsprechen den mit den gleichen Symbolen bezeichneten Gaszuständen der Fig. 3.

Das aus dem Gasbehälter entnommene Gas (①) wird entlang der Kurve 22 adiabat verdichtet, entlang der Kurve 24 isobar abgekühlt, entlang der Kurve 26 adiabat entspannt und entlang der Kurve 28 isobar aufgeheizt. Die dabei aufgenommene Lagerwärme wird nach außen in die Umgebung abgeführt. Wie die Fig. 4 erkennen lässt und wie weiter vorne bereits dargelegt wurde, ist der dargestellte Prozess kein Kreisprozess, sondern ein "offener" Prozess, d.h. das Gas wird verbraucht.

Fig. 5 zeigt den gleichen Prozessablauf, bezogen auf das Gas, nochmals im Ts-Diagramm, wobei die verwendeten Symbole ①, ② usw. wiederum den in den Fig. 3 und 4 verwendeten Symbolen entsprechen. Wie allgemein bekannt ist, entsprechen die Flächen unter einer Isobaren jeweils einer Enthalpidifferenz, d.h. einer zugeführten bzw. abgeführten spezifischen Wärmemenge, so dass unter der Isobarenkurve 24' die dem Gas entzogene spezifische Wärmemenge Q₀ und unter der Isobarenkurve 28' die vom Gas aufgenommene spezifische Wärmemenge Q₁ abgelesen werden kann.

### Bezugszeichenliste

- 2: Lager
- 4: Gas-/Schmierstoffgemisch
- 6: Drosselvorrichtung
- 8: Gas
- 10: Gasbehälter
- 12: Verdichter
- 14: Kühleinrichtung
- 16: Pfeil
- 18: Drosselvorrichtung
- 19: Pfeil
- 20: Wärmetauscher, Lager
- 21: Schmierstoffbehälter
- 22: Kurve
- 24: Kurve
- 24': Kurve
- 26: Kurve
- 28: Kurve
- 28': Kurve
- a: Kurve
- b: Kurve
- p: Druck
- Q: spezifische Wärmemenge
- Q₀: abgeführte Wärmemenge
- Q₁: zugeführte Wärmemenge
- T: Temperatur
- t: Zeit

## Patentansprüche

1. Verfahren zum Schmieren und Kühlen eines hochbelasteten Lagers, insbesondere einer schnelllaufenden und/oder wärmebelasteten Lagers, wobei ein Schmiermittel und ein Gas gemischt werden, **gekennzeichnet durch** die folgenden Verfahrensschritte:
a) Ein Gas wird in einen überkritischen Zustand versetzt.
b) Ein Schmiermittel wird in dem überkritischen Gas gelöst.
c) Das Gas-/Schmiermittelgemisch wird dem Lager zugeführt und in diesem unter Trennung des Schmiermittels vom Gas entspannt.
d) Gas und Schmiermittel werden aus dem Lager abgeführt.

2. Verfahren nach Anspruch 1, **dadurch gekennzeichnet, dass** das Gas einem Gasbehälter entnommen und nach dem Durchströmen des Lagers in die Umgebung entlassen wird.

3. Verfahren nach Anspruch 2, **dadurch gekennzeichnet, dass** das Gas im Gasbehälter unter natürlichen Umgebungsbedingungen gespeichert und zum Zwecke der Überführung in einen überkritischen Zustand adiabat verdichtet wird.

4. Verfahren nach einem der Ansprüche 1 bis 3, **dadurch gekennzeichnet, dass** das Gas nach der Verdichtung und vor der Zugabe des Schmiermittels isobar abgekühlt wird.

5. Verfahren nach einem der Ansprüche 2 bis 4, **dadurch gekennzeichnet, dass** das Gas im Lagerbereich unter Abgabe des Schmiermittels adiabat entspannt sowie unter Aufnahme von Lagerwärme isobar aufgeheizt und in die Umgebung entlassen wird.

6. Verfahren nach einem der Ansprüche 1 bis 5, **dadurch gekennzeichnet, dass** das Schmiermittel aus einem Schmiermittelbehälter oder dergleichen entnommen und nach dem Durchlauf durch das Lager in den Schmiermittelbehälter zurückgeführt wird.

7. Verfahren nach einem der Ansprüche 1 bis 6, **dadurch gekennzeichnet, dass** als Gas Kohlendioxid (CO₂) verwendet wird.

8. Verfahren nach einem der Ansprüche 1 bis 7, **dadurch gekennzeichnet, dass** als Schmiermittel ein auf Kohlenwasserstoff basierender Schmierstoff verwendet wird.

9. Vorrichtung zur Durchführung des Verfahrens nach einem der Ansprüche 1 bis 8, wobei eine Einrichtung zum Mischen eines Schmierstoffs mit einem Gas vorgesehen ist, **gekennzeichnet durch**
■ einen Gasbehälter (10) zum Speichern eines Gases;
■ einen dem Gasbehälter (10) nachgeordneter Verdichter (Pumpe) (12) zum Verdichten des Gases;
■ eine dem Verdichter (12) nachgeordnete Kühleinrichtung (14) zum Kühlen des Gases;
■ eine der Kühleinrichtung (14) nachgeordnete Vorrichtung zum Zuführen eines Schmierstoffs (Pfeil 16) zu dem Gas;
■ eine dieser Vorrichtung nachgeordnete Einrichtung zum Zuführen des Gas-/Schmierstoffgemisches zum Lager;
■ eine dem Lager (2) zugeordnete Drosselvorrichtung (18) zum Entspannen des Gas-/Schmierstoffgemisches;
■ eine dem Lager (2) nachgeordnete Einrichtung zum Abführen des Gases und des Schmierstoffs.

10. Vorrichtung nach Anspruch 9, **gekennzeichnet durch** einen Schmierstoffbehälter (21), aus dem der Schmierstoff zum Zwecke der Zuführung zum Gas entnommen und in den er nach Durchlaufen des Lagerbereiches zurückgeführt wird.

## Claims

1. Method for lubricating and cooling a bearing that is subject to high loads, in particular a high-speed and/or thermally loaded bearing, wherein a lubricant and a gas are mixed, **characterized by** the following method steps:
a) a gas is transferred into a supercritical state;
b) a lubricant is dissolved in the supercritical gas;
c) the gas/lubricant mixture is supplied to the bearing and is depressurized therein with the lubricant being separated from the gas;
d) gas and lubricant are removed from the bearing.

2. Method according to Claim 1, **characterized in that** the gas is taken from a gas container and, after flowing through the bearing, is released into the surroundings.

3. Method according to Claim 2, **characterized in that** the gas is stored in the gas container under natural ambient conditions and, for the purpose of being transferred into a supercritical state, is sealed adiabatically.

4. Method according to one of Claims 1 to 3, **characterized in that,** after the sealing and before the lubricant is added, the gas is cooled isobarically.

5. Method according to one of Claims 2 to 4, **characterized in that** the gas is depressurized adiabatically in the bearing region, with the lubricant being discharged, and is heated isobarically, with bearing heat being absorbed, and is released into the surroundings.

6. Method according to one of Claims 1 to 5, **characterized in that** the lubricant is removed from a lubricant container or the like and, after running through the bearing, is returned to the lubricant container.

7. Method according to one of Claims 1 to 6, **characterized in that** carbon dioxide (CO₂) is used as the gas.

8. Method according to one of Claims 1 to 7, **characterized in that** a hydrocarbon-based lubricant is used as the lubricant.

9. Device for carrying out the method according to one of Claims 1 to 8, wherein a means for mixing a lubricant with a gas is provided, **characterized by**
■ a gas container (10) for storing a gas;
■ a compressor (pump) (12) which is arranged downstream of the gas container (10) and is intended for compressing the gas;
■ a cooling means (14) which is arranged downstream of the compressor (12) and is intended for cooling the gas;
■ a device which is arranged downstream of the cooling means (14) and is intended for supplying a lubricant (arrow 16) to the gas;
■ a means which is arranged downstream of said device and is intended for supplying the gas/lubricant mixture to the bearing;
■ a throttle device (18) which is assigned to the bearing (2) and is intended for the depressurization of the gas/lubricant mixture;
■ a means which is arranged downstream of the bearing (2) and is intended for removing the gas and the lubricant.

10. Device according to Claim 9, **characterized by** a lubricant container (21) from which the lubricant is removed for the purpose of supplying it to the gas and into which said lubricant is returned after running through the bearing region.

## Revendications

1. Procédé pour lubrifier et refroidir un palier fortement chargé, notamment un palier à cadence élevée et/ou soumis à une charge thermique, dans lequel un lubrifiant et un gaz sont mélangés, **caractérisé par** les étapes de procédé suivantes :
a) Un gaz est amené dans un état surcritique.
b) Un lubrifiant est dissous dans le gaz surcritique.
c) Le mélange gaz/lubrifiant est introduit dans le palier et détendu dans celui-ci en séparant le lubrifiant du gaz.
d) Le gaz et le lubrifiant sont évacués du palier.

2. Procédé selon la revendication 1, **caractérisé en ce que** le gaz est prélevé d'un contenant de gaz et est libéré dans l'environnement extérieur après avoir traversé le palier.

3. Procédé selon la revendication 2, **caractérisé en ce que** le gaz est stocké dans le contenant de gaz dans des conditions environnementales naturelles et est soumis à une compression adiabatique afin de l'amener dans un état surcritique.

4. Procédé selon une des revendications 1 à 3, **caractérisé en ce que** le gaz est soumis à un refroidissement isobare après la compression et avant l'ajout du lubrifiant.

5. Procédé selon une des revendications 2 à 4, **caractérisé en ce que** le gaz est soumis dans la région du palier à une détente adiabatique en éliminant le lubrifiant et est soumis à un chauffage isobare en absorbant la chaleur du palier et est libéré dans l'environnement extérieur.

6. Procédé selon une des revendications 1 à 5, **caractérisé en ce que** le lubrifiant est prélevé dans un contenant de lubrifiant ou similaire et est réintroduit dans le contenant de lubrifiant après avoir traversé le palier.

7. Procédé selon une des revendications 1 à 6, **caractérisé en ce que,** en tant que gaz, du dioxyde de carbone (CO₂) est employé.

8. Procédé selon une des revendications 1 à 7, **caractérisé en ce que,** en tant que lubrifiant, un lubrifiant à base d'hydrocarbure est employé.

9. Dispositif pour mettre en oeuvre le procédé selon une des revendications 1 à 8, dans lequel un dispositif pour mélanger un lubrifiant avec un gaz est prévu, **caractérisé par** :
• Un contenant de gaz (10) pour stocker un gaz ;
• Un compresseur (pompe) (12) disposé en aval du contenant de gaz (10) afin de compresser le gaz ;
• Un dispositif de refroidissement (14) disposé en aval du compresseur (12) afin de refroidir le gaz ;
• Un dispositif pour introduire un lubrifiant (flèche 16) dans le gaz disposé en aval du dispositif de refroidissement (14) ;
• Un dispositif pour introduire le mélange gaz/lubrifiant dans le palier disposé en aval de ce dispositif ;
• Un dispositif d'étranglement (18) associé au palier (2) afin de détendre le mélange gaz/lubrifiant ;
• Un dispositif disposé en aval du palier (2) afin d'évacuer le gaz et le lubrifiant.

10. Dispositif selon la revendication 9, **caractérisé par** un contenant de lubrifiant (21), duquel le lubrifiant est prélevé afin de l'introduire dans le gaz et dans lequel il est réintroduit après avoir traversé la région du palier.
